# EUROPÄISCHE PATENTSCHRIFT

(11) **EP 4 147 886 B1**
(45) Veröffentlichungstag und Bekanntmachung des Hinweises auf die Patenterteilung: **05.06.2024**
(21) Anmeldenummer: 22193462.3
(22) Anmeldetag: 01.09.2022
(51) Int. Cl.: B60C 23/04, G01C 22/02

(54) **VERFAHREN ZUM ERMITTELN EINER FAHRSTRECKE EINES FAHRZEUGREIFENS, MESSANORDNUNG UND FAHRZEUG**
METHOD FOR DETERMINING A ROUTE OF A VEHICLE TYRE, MEASURING ASSEMBLY AND VEHICLE
PROCÉDÉ DE DÉTERMINATION D'UNE TRAJECTOIRE D'UN PNEU DE VÉHICULE, DISPOSITIF DE MESURE ET VÉHICULE

(30) Priorität: 08.09.2021 DE 102021209938
(43) Veröffentlichungstag der Anmeldung: 15.03.2023
(73) Patentinhaber: Continental Reifen Deutschland GmbH, 30175 Hannover (DE)
(72) Erfinder: Sahlmüller, Baldo, 30165 Hannover (DE)
(74) Vertreter: Continental Corporation

(56) Entgegenhaltungen:
- EP-A1- 3 828 551
- DE-A1-102018 214 154
- US-A1- 2014 107 946

## Beschreibung

Die Erfindung betrifft ein Verfahren zum Ermitteln einer Fahrstrecke eines Fahrzeugreifens, eine Messanordnung zur Durchführung des Verfahrens und ein Fahrzeug mit der Messanordnung.

Es gibt bereits sensorbasierte Kilometerzähler für Reifen-Sensor-Module, die am Innerliner des Fahrzeugreifens angebracht sind. Diese Kilometerzähler benutzen eine radiale Beschleunigung, die am Innerliner von Sensoreinheiten im Reifen-Sensor-Modul gemessen wird, und berechnen daraus mit dem Reifenradius eine Abrollgeschwindigkeit des Fahrzeugreifens. Aus der Abrollgeschwindigkeit und dem Zeitintervall kann so die Fahrstrecke berechnet werden, die der Fahrzeugreifen zurückgelegt hat. Dies ist beispielhaft in DE 10 2018 214 154 A1 beschrieben, wobei ergänzend ein Korrekturfaktor gebildet wird, der auf einer vorbestimmten Abweichung der von der Sensoreinheit erfassten radialen Beschleunigung basiert. Dadurch können vermeintlich auftretende Fehler bei der Messung kompensiert werden.

Es gibt Betriebsmodi in derartigen Reifen-Sensor-Modulen, in denen eine Messung der radialen Beschleunigung nicht stattfindet, wie beispielsweise in US10399394B2 beschrieben. Idealerweise werden diese Betriebsmodi nur im Stillstand eingenommen (Park-Betriebsmodus), wobei sich die jeweiligen Fahrzeuge aus technischen Gründen allerdings mit bis zu einer Fahrzeuggeschwindigkeit von 20 km/h oder 25 km/h bewegen, ohne dass das Reifen-Sensor-Modul den Park-Betriebsmodus verlässt bzw. diesen deaktiviert. Die bei diesen Fahrzeuggeschwindigkeiten gefahrenen Kilometer werden vom Kilometerzähler dann nicht erfasst. Außerdem ist die Auflösung einer Messung der radialen Beschleunigung limitiert und spielt bei niedrigen Fahrzeuggeschwindigkeiten prozentual gesehen eine größere Rolle. Dies ist beispielsweise für Fahrzeuge im Stadtverkehr (Stadtbusse, Müllabfuhr oder andere) relevant. Daher ist die Ermittlung der Fahrtstrecke des Fahrzeugreifens für solche Fahrzeuge fehlerbehaftet.

In US10576797B2 ist ein Reifen-Sensor-Modul beschrieben, das in unterschiedlichen Betriebsmodi betrieben werden kann. Um die für die Einstellung der Betriebsmodi herangezogene Fahrzeuggeschwindigkeit exakt ermitteln zu können, wird die von dem Reifen-Sensor-Modul gemessene Beschleunigung über mehrere Umdrehungen betrachtet.

In US5899954A ist eine Korrektur einer Distanz bzw. einer zurückgelegten Fahrtstrecke bei Abbiegevorgängen beschrieben. In US9566834B2 ist ferner eine temperaturabhängige Korrektur von Beschleunigungswerten vorgesehen. US5402365A beschreibt eine Korrektur basierend auf der Messung von Raddrehzahlunterschieden zwischen Rädern einer Fahrzeugachse.

Der folgenden Erfindung liegt die Aufgabe zugrunde, ein Verfahren, eine Messanordnung und ein Fahrzeug anzugeben, mit denen eine genaue Ermittlung der Fahrtstrecke eines Fahrzeugreifens ermöglicht wird.

Diese Aufgabe wird durch ein Verfahren, eine Messanordnung und ein Fahrzeug gemäß den unabhängigen Ansprüchen gelöst. Die Unteransprüche geben bevorzugte Weiterbildungen an.

In dem erfindungsgemäßen Verfahren zum Ermitteln einer Fahrtstrecke eines Fahrzeugreifens, wobei der Fahrzeugreifen ein Reifen-Sensor-Modul mit einer Sensoreinheit zur Messung einer radialen Beschleunigung aufweist, sind demnach mindestens die folgenden Schritte vorgesehen:
- Erzeugen von die radiale Beschleunigung des Fahrzeugreifens charakterisierenden Sensor-Signalen durch die Sensoreinheit über mindestens ein Zeitintervall;
- Ermitteln mindestens eines durch den Fahrzeugreifen innerhalb des jeweiligen Zeitintervalls zurückgelegten Streckenintervalls in Abhängigkeit der erzeugten Sensor-Signale durch einen Algorithmus; und
- Ermitteln der Fahrtstrecke des Fahrzeugreifens aus dem mindestens einen ermittelten Streckenintervall, beispielsweise durch Aufsummierung der einzelnen Streckenintervalle, wobei bei der Ermittlung des mindestens einen Streckenintervalls von dem Algorithmus ein Korrekturfaktor berücksichtigt wird zum Korrigieren des ermittelten Streckenintervalls.

Das Verfahren ist dabei dadurch gekennzeichnet, dass der Korrekturfaktor aus einer Korrekturfunktion ermittelt wird, wobei die Korrekturfunktion der von der Sensoreinheit gemessenen radialen Beschleunigung oder einer davon abhängigen Größe, z.B. einer Abrollgeschwindigkeit des Fahrzeugreifens, einen Korrekturfaktor zuordnet,
wobei die Korrekturfunktion derartig festgelegt ist, dass das Streckenintervall bei einer geringen radialen Beschleunigung durch den jeweils zugeordneten Korrekturfaktor stärker korrigiert wird als bei einer hohen radialen Beschleunigung.

Erfindungsgemäß ist auch eine Messanordnung zur Durchführung des erfindungsgemäßen Verfahrens sowie ein Fahrzeug mit einer derartigen Messanordnung vorgesehen, wobei der Algorithmus auf dem Reifen-Sensor-Modul auf einer Verarbeitungseinheit oder im Fahrzeug auf einer Auswerteeinheit abseits des Fahrzeugreifens vorgesehen sein kann.

Der Vorteil der Erfindung ist, dass auch gefahrene Kilometer statistisch berücksichtigt werden, bei denen das Reifen-Sensor-Modul aufgrund einer zu geringen radialen Beschleunigung deaktiviert ist und/oder bei geringen radialen Beschleunigungen aufgrund einer Auflösung der Sensoreinheit ungenaue Ergebnisse liefert. Dabei wird davon ausgegangen, dass die während einer Deaktivierung des Reifen-Sensor-Moduls zurückgelegte Strecke nachfolgend durch eine höhere Gewichtung (z.B. Korrekturfaktor größer 1) bzw. eine stärkere Korrektur des Streckenintervalls bei niedrigen gemessenen radialen Beschleunigungen, d.h. unmittelbar nach einer Deaktivierung, kompensiert wird. Auch ein aufgrund der Auflösung der Sensoreinheit bedingter Fehler fällt bei geringen radialen Beschleunigungen stärker ins Gewicht, so dass auch aufgrund dessen das jeweils ermittelte Streckenintervall bei geringen gemessenen radialen Beschleunigungen stärker zu korrigieren ist als bei höheren radialen Beschleunigungen. Bei hohen radialen Beschleunigungen hingegen wird davon ausgegangen, dass die genannten Effekte nicht mehr zu kompensieren bzw. zu korrigieren sind (z.B. Korrekturfaktor ungefähr 1). Dies kann durch eine entsprechende beschleunigungsabhängige Auswahl des Korrekturfaktors aus der Korrekturfunktion berücksichtigt werden. Dadurch wird der Fehler der Kilometermessung bzw. der Ermittlung der Fahrtstrecke über das Reifen-Sensor-Modul verringert.

Vorzugsweise ist dabei vorgesehen, dass in Abhängigkeit der ermittelten radialen Beschleunigung und einem Abstand zwischen der Sensoreinheit und einer Drehachse des jeweiligen Fahrzeugreifens und/oder einem Reifenradius zunächst die Abrollgeschwindigkeit des jeweiligen Fahrzeugreifens ermittelt wird, und nachfolgend aus der ermittelten Abrollgeschwindigkeit unter Berücksichtigung des Zeitintervalls das Streckenintervall berechnet wird. Dadurch wird eine einfache Möglichkeit einer Streckenbestimmung anhand der von der Sensoreinheit gelieferten Informationen ermöglicht.

Vorzugsweise ist weiterhin vorgesehen, dass der der jeweiligen radialen Beschleunigung zugeordnete Korrekturfaktor auf die ermittelte radiale Beschleunigung oder auf eine ermittelte Abrollgeschwindigkeit oder auf das berechnete Streckenintervall angewandt wird, insbesondere damit multipliziert wird, zum Ermitteln des korrigierten Streckenintervalls. Dadurch kann durch eine einfache Rechenoperation bzw. eine Verknüpfung mit der jeweiligen Variable der Berechnung eine statistische und/oder auflösungsbedingte Korrektur vorgenommen werden.

Vorzugsweise ist weiterhin vorgesehen, dass die Korrekturfunktion eine stetige Funktion ist. Demnach kann jeder von der Sensoreinheit gemessenen radialen Beschleunigung ein Korrekturfaktor eindeutig zugeordnet werden, so dass für jegliche Fahrzeuggeschwindigkeiten bzw. Abrollgeschwindigkeiten eine genaue Korrektur erfolgen kann. Grundsätzlich könnte jedoch auch vorgesehen sein, dass die Korrekturfunktion durch eine Stufenfunktion bzw. durch diskrete Werte, die beispielweise in einer Look-up-Tabelle gespeichert sind, gebildet wird.

Vorzugsweise kann dabei vorgesehen sein, dass die Korrekturfunktion derartig festgelegt ist, dass einer geringen radialen Beschleunigung ein Korrekturfaktor von größer als 1 zugeordnet wird und bei ansteigender radialer Beschleunigung ein asymptotisch gegen 1 zulaufender Korrekturfaktor zugeordnet wird. Dadurch wird berücksichtigt, dass z.B. bei einer multiplikativen Anwendung des Korrekturfaktors bei geringen radialen Beschleunigungen eine deutlichere Korrektur bzw. Kompensation zu erfolgen hat als bei hohen radialen Beschleunigungen, bei denen die o.g. Fehler nicht oder nur noch in sehr geringem Maße auftreten. Dies wir durch die asymptotische Annäherung an 1 erreicht.

Vorzugsweise ist weiterhin vorgesehen, dass die Korrekturfunktion in Abhängigkeit eines Reifenradius des jeweiligen Fahrzeugreifens und/oder eines Abstands zwischen der Drehachse des jeweiligen Fahrzeugreifens und der Sensoreinheit des Reifen-Sensor-Moduls und/oder in Abhängigkeit eines Einsatzbereiches des den Fahrzeugreifen aufweisenden Fahrzeuges und/oder in Abhängigkeit der verwendeten Sensoreinheit festgelegt wird. Dadurch kann berücksichtigt werden, dass die o.g. Fehler bzw. Ungenauigkeiten in Abhängigkeit der Anwendung häufiger oder weniger häufig auftreten, beispielsweise im Stadtverkehr (häufigere Deaktivierung des Reifen-Sensor-Moduls) oder auf dem Land (weniger häufige Deaktivierung). Zudem variiert je nach verwendeter Sensoreinheit die Auflösung und demnach auch die Auswirkung auf die Genauigkeit bei der Ermittlung geringer radialer Beschleunigungen. Dies kann bei der Festlegung des Verlaufs der Korrekturfunktion entsprechend berücksichtigt werden. Die Festlegung kann dabei vorher basierend auf Versuchen erfolgen und die Korrekturfunktion kann im Betrieb des Fahrzeuges dann vom Algorithmus zur entsprechenden Anwendung eingelesen werden.

Vorzugsweise ist weiterhin vorgesehen, dass der Algorithmus auf einer Verarbeitungseinheit am Reifen-Sensor-Modul oder auf einer Auswerteeinheit am Fahrzeug (abseits des Fahrzeugreifens) ausgeführt wird. Demnach kann die Auswertung und Ermittlung der Fahrstrecke auch direkt am Fahrzeugreifen erfolgen, so dass auch bei bzw. nach einem Reifenwechsel noch auf die jeweiligen reifenindividuellen Daten an einer anderen Stelle zurückgegriffen werden kann. Bei einer Auswertung auf dem Fahrzeug hingegen können auch bestehende Reifen-Sensor-Module ohne Nachrüstung des Algorithmus verwendet werden und die rechenaufwändigen Schritte können dann im Fahrzeug durchgeführt werden, so dass die Batterie des Reifen-Sensor-Moduls geschont werden kann.

Vorzugsweise ist weiterhin vorgesehen, dass das Reifen-Sensor-Modul in unterschiedliche Betriebsmodi geschaltet werden kann, wobei eine Ermittlung des Streckenintervalls lediglich dann stattfindet, wenn als Betriebsmodus kein Park-Betriebsmodus aktiviert ist. Auch dadurch kann die Batterie des Reifen-Sensor-Moduls geschont werden, wobei aufgrund des erfindungsgemäßen Verfahrens auch weiterhin eine genaue Ermittlung der Fahrstrecke erfolgen kann, da die unter Umständen verzögerte Deaktivierung des Park-Betriebsmodus des Reifen-Sensor-Moduls durch die Korrekturfunktion entsprechend kompensiert bzw. korrigiert werden kann.

In den Zeichnungen zeigen:
- Fig. 1: eine schematische Ansicht eines Fahrzeuges mit einer Messanordnung;
- Fig. 1a: eine schematische Ansicht eines Fahrzeugreifens;
- Fig. 2: eine schematische Ansicht eines Reifen-Sensor-Moduls der Messanordnung gemäß Fig. 1 und 1a; und
- Fig. 3: eine beispielhafte Korrekturfunktion.

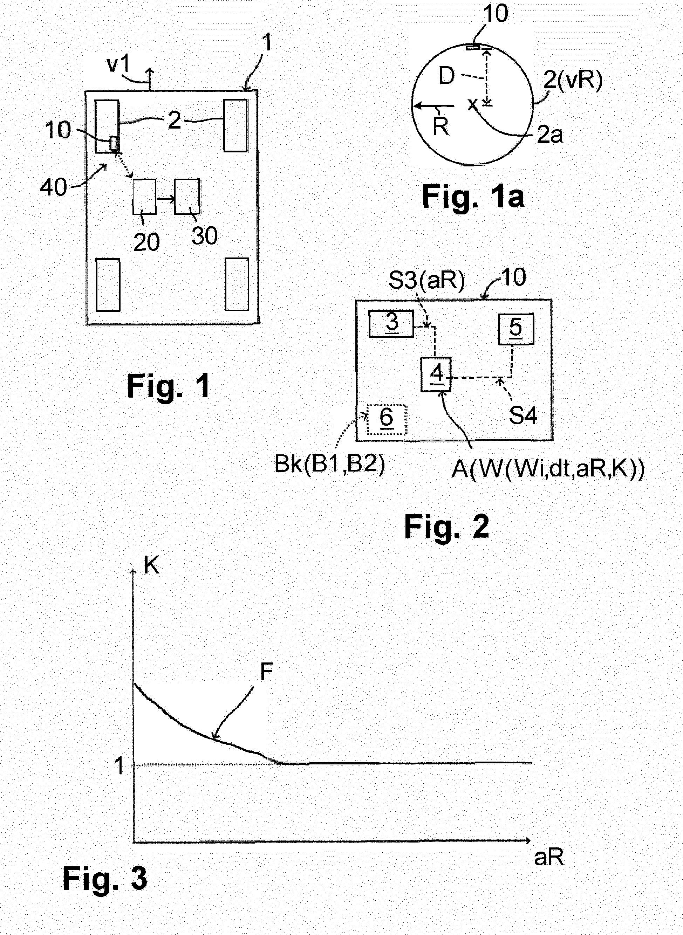

Figur 1 zeigt ein Fahrzeug 1 mit mehreren Fahrzeugreifen 2, wobei an zumindest einem der Fahrzeugreifen 2 ein Reifen-Sensor-Modul 10 mit einer Sensoreinheit 3 angeordnet ist. Das Reifen-Sensor-Modul 10 ist wie in Fig. 1a schematisch dargestellt, innenseitig des Fahrzeugreifens 2, vorzugsweise am Innerliner oder am Lufteinlassventil, befestigt und ausgebildet, über die Sensoreinheit 3 eine auf die Lauffläche des Fahrzeugreifens 2 wirkende radialen Beschleunigung aR, d.h. eine Beschleunigung in radialer Richtung R, zu messen.

In dem Reifen-Sensor-Modul 10 ist ferner eine Verarbeitungseinheit 4 angeordnet, die signalleitend mit der Sensoreinheit 3 verbunden ist und die von der Sensoreinheit 3 erzeugte und ausgegebenen Sensor-Signale S3 aufnehmen und verarbeiten kann. Weiterhin ist eine Kommunikationseinheit 5 im Reifen-Sensor-Modul 10 angeordnet, über das von der Verarbeitungseinheit 4 erzeugte Daten-Signale S4 drahtlos ausgegeben werden können, beispielsweise an eine Auswerteeinheit 20 oder eine Fahrzeug-Steuereinrichtung 30 im Fahrzeug 1 (abseits des Fahrzeugreifens 2), die jeweils über eine entsprechende Empfangseinheit zum Empfangen der Daten-Signale S4 verfügen.

Die Verarbeitung der Sensor-Signale S3 in der Verarbeitungseinheit 4 kann hierbei darin bestehen, dass die Sensor-Signale S3 inhaltlich unverändert in von der Kommunikationseinheit 5 übertragbare ggf. codierte Daten-Signale S4 umgewandelt werden. Es kann aber auch vorgesehen sein, dass in Abhängigkeit der Sensor-Signale S3 über einen auf der Verarbeitungseinheit 4 installierten Algorithmus A bereits eine festgelegte Umrechnung erfolgt und diese umgerechneten Daten dann Inhalt der Daten-Signale S4 sind, die über die Kommunikationseinheit 5 ausgegeben werden. Findet lediglich eine inhaltlich unveränderte Weitergabe der Sensor-Signale S3 statt, kann eine weitere Umrechnung dann reifenindividuell auch in der Auswerteeinheit 20 des Fahrzeuges 1 über einen auf dieser installierten Algorithmus A erfolgen. Das Reifen-Sensor-Modul 10 und der Algorithmus A (auf der Verarbeitungseinheit 4 des Reifen-Sensor-Moduls 10 oder auf der Auswerteeinheit 20 im Fahrzeug 1) bilden dabei eine Messanordnung 40 aus, die im jeweiligen Fahrzeug 1 vorgesehen werden kann, um eine Ermittlung einer Fahrtstrecke W des jeweiligen Fahrzeugreifens 2, an dem das Reifen-Sensor-Modul 10 befestigt wird, zu ermöglichen.

Dabei ist insbesondere vorgesehen, dass die Fahrstrecke W des jeweiligen Fahrzeugreifens 1 über den installierten Algorithmus A basierend auf der von der Sensoreinheit 3 gemessenen radialen Beschleunigung aR, die im Sensor-Signal S3 enthalten ist, berechnet wird. Dazu wird in Abhängigkeit der gemessenen radialen Beschleunigung aR zusammen mit einem Abstand D zwischen der Sensoreinheit 3 und einer Drehachse 2a des jeweiligen Fahrzeugreifens 2 (entspr. ungefähr dem Reifenradius) zunächst nach einfachen fahrdynamischen Betrachtungen eine Abrollgeschwindigkeit vR innerhalb eines festgelegten Zeitintervalls dt ermittelt, mit der der Fahrzeugreifen 2 auf einem Untergrund abrollt. Nachfolgend wird dann unter Berücksichtigung des festgelegten Zeitintervalls dt ein Streckenintervall Wi (Index i) berechnet, aus dem sich dann durch Aufsummierung über alle i ermittelten Streckenintervalle Wi die gesamte Fahrtstrecke W des jeweiligen Fahrzeugreifens 2 ergibt.

Das Reifen-Sensor-Modul 10 kann über eine Modul-Steuereinrichtung 6, die mit der Verarbeitungseinheit 4 zusammengefasst ist oder aber separat ausgeführt sein kann, in k unterschiedliche Betriebsmodi Bk (Index k) verstellt werden, wobei insbesondere ein Park-Betriebsmodus B1 und ein Fahrt-Betriebsmodus B2 vorgesehen sind. Im Fahrt-Betriebsmodus B2 gibt die Sensoreinheit 3 fortlaufend bzw. in vorbestimmten kurzen Zeitabständen ein der radialen Beschleunigung aR entsprechendes Sensor-Signal S3 aus, das dann wie oben beschrieben weiterverarbeitet und als Grundlage für die Bestimmung des Streckenintervalls Wi und der Fahrtstrecke W herangezogen werden kann. Im Park-Betriebsmodus B1, der insbesondere im Stillstand des Fahrzeuges 1 aktiviert wird, findet keine fortlaufende Ermittlung der radialen Beschleunigung aR und insbesondere keine Weiterverarbeitung von Signalen statt, um im Stillstand des Fahrzeuges 1 die Batterie des Reifen-Sensor-Moduls 10 zu schonen.

Vielmehr wird nur sporadisch in längeren Zeitabständen ein die radiale Beschleunigung aR charakterisierendes Sensor-Signal S3 erzeugt, wobei basierend darauf der Status des Reifen-Sensor-Moduls 10 geprüft wird bzw. festgestellt wird, ob eine Deaktivierung des Park-Betriebsmodus B1 und eine Aktivierung des Fahrt-Betriebsmodus B2 nötig ist. Dazu wird beispielweise aus einer kurzzeitigen Erfassung der radialen Beschleunigung aR die Abrollgeschwindigkeit vR ermittelt und basierend darauf geprüft, ob sich das Fahrzeug 1 noch im Stillstand befindet oder nicht.

Aus technischen Gründen kommt es vor, dass sich das Fahrzeug 1 mit bis zu einer Fahrzeuggeschwindigkeit v1 von 20 km/h oder 25 km/h bewegt, ohne dass das Reifen-Sensor-Modul 10 in den Fahrt-Betriebsmodus B2 übergeht und den Park-Betriebsmodus B1 verlässt. Dadurch wird auch die oben beschriebene Ermittlung der von dem jeweiligen Fahrzeugreifen 2 zurückgelegten gesamten Fahrstrecke W verfälscht, da die radiale Beschleunigung aR erst verzögert gemessen wird. Um dies zu vermeiden, ist vorgesehen, dass der auf der Verarbeitungseinheit 4 des Reifen-Sensor-Moduls 10 oder in der Auswerteeinheit 20 des Fahrzeuges 1 installierte Algorithmus A eine Korrekturfunktion F beinhaltet.

Die Korrekturfunktion F ist dabei vorzugsweise eine stetige Funktion, die wie in Fig. 3 dargestellt der radialen Beschleunigung aR einen Korrekturfaktor K zuordnet. Der der aktuell gemessenen radialen Beschleunigung aR zugeordnete Korrekturfaktor K wird dann von dem Algorithmus A bei der oben beschriebenen Ermittlung des jeweiligen Streckenintervalls Wi entsprechend berücksichtigt. Dies erfolgt beispielsweise dadurch, dass der jeweils zugeordnete Korrekturfaktor K auf die gemessene radiale Beschleunigung aR angewandt wird, beispielsweise durch Multiplikation. Alternativ kann der jeweils zugeordnete Korrekturfaktor K bei entsprechender Festlegung der Korrekturfunktion F aber auch auf die Abrollgeschwindigkeit vR, die aus der radialen Beschleunigung aR folgt, oder auf das wiederum daraus folgende Streckenintervall Wi angewandt werden. In allen Fällen erfolgt eine korrigierte Ermittlung des Streckenintervalls Wi in Abhängigkeit des der aktuell vorliegenden radialen Beschleunigung aR zugeordneten Korrekturfaktors K.

Auf diese Weise kann vom Algorithmus A berücksichtigt werden, dass unmittelbar vor dem Deaktivieren des Park-Betriebsmodus B 1 bereits ein oder mehrere Streckenintervalle Wi zurückgelegt wurden, die aufgrund der deaktivierten Messung der radialen Beschleunigung aR aber noch nicht erfasst werden konnte(n). Deshalb wird kurz nach dem Deaktivieren des Park-Betriebsmodus B1 bei noch geringen Fahrzeug-Geschwindigkeiten v1, d.h. wenn geringe radiale Beschleunigungen aR gemessen werden, durch den Algorithmus A aufgrund der Anwendung des jeweils zugeordneten Korrekturfaktors K ein leicht erhöhtes Streckenintervall Wi ermittelt. Dadurch soll die zuvor (im Park-Betriebsmodus B1) ausbleibende Ermittlung zumindest anteilig kompensiert werden.

Um dies zu erreichen, werden in der Korrekturfunktion F geringen radialen Beschleunigungen aR Korrekturfaktoren K zugeordnet, die größer als 1 sind, und hohen radialen Beschleunigungen aR Korrekturfaktoren K von ungefähr oder gleich 1. Für ansteigende radiale Beschleunigungen aR nähert sich der Korrekturfaktor also asymptotisch an ca. 1 an. Es wird also davon ausgegangen, dass bei hohen Fahrzeuggeschwindigkeiten v1 bzw. hohen Abrollgeschwindigkeiten vR bzw. hohen radialen Beschleunigungen aR keine Korrektur mehr nötig ist, da die oben beschriebenen Ungenauigkeiten lediglich beim Übergang vom Park-Betriebsmodus B1 in den Fahrt-Betriebsmodus B2, d.h. bei niedrigen Abrollgeschwindigkeiten vR auftreten.

Die Korrekturfunktion F kann dabei in Abhängigkeit des jeweiligen Reifenradius bzw. des Abstands D zwischen der Drehachse 2a des Fahrzeugreifens 2 und dem Reifen-Sensor-Moduls 10 festgelegt werden und/oder in Abhängigkeit eines Einsatzbereiches des Fahrzeuges 1 und/oder in Abhängigkeit der verwendeten Sensoreinheit 3. Dadurch kann zum einen berücksichtigt werden, wie oft sich das Reifen-Sensor-Modul 10 voraussichtlich im aktivierten Park-Betriebsmodus B1 befindet und daher eine Ermittlung der radialen Beschleunigung aR verzögert wird. Dies kann bei Fahrzeugen, die außerhalb der Stadt "auf dem Land" betrieben werden anders sein als bei beispielweise Bussen oder Müllfahrzeugen im Stadtverkehr, so dass auch die Notwendigkeit und das Ausmaß für die oben beschriebene Korrektur variiert.

Des Weiteren kann in der Korrekturfunktion F bzw. in den Korrekturfaktoren K aber auch eine Auflösung der Sensoreinheit 3 im Reifen-Sensor-Modul 10 berücksichtigt werden. Bei niedrigen radialen Beschleunigungen aR hat die jeweilige Auflösung der Sensoreinheit 3 nämlich eine größere Auswirkung auf die Genauigkeit der Messung als bei höheren radialen Beschleunigungen aR. Daher ist bei niedrigen radialen Beschleunigungen aR eine andere Korrektur nötig als bei hohen radialen Beschleunigungen aR, was sich entsprechend ebenfalls in der in Fig. 3 dargestellten Korrekturfunktion F abbilden lässt. Dabei kann auch berücksichtigt werden, dass je nach Abstand D des Reifen-Sensor-Moduls 10 zur Drehachse 2a (vgl. Reifengröße) auch unterschiedlich hohe radiale Beschleunigungen aR gemessen werden und diese Messung durch die Auflösung der Sensoreinheit 3 unterschiedlich stark beeinflusst wird.

Insgesamt lässt sich also durch diese von der gemessenen radialen Beschleunigung aR abhängige Korrektur über die festgelegte Korrekturfunktion F eine exaktere Ermittlung der Streckenintervalle Wi und damit der Fahrtstrecke W des jeweiligen Fahrzeugreifens 2 erreichen. Nachfolgend kann diese reifenindividuell ermittelte Fahrstrecke W im Fahrzeug 1 durch die Fahrzeug-Steuereinrichtung 30 entsprechend weiterverarbeitet werden.

### Bezugszeichenliste

- 1: Fahrzeug
- 2: Fahrzeugreifen
- 2a: Drehachse des Fahrzeugreifens 2
- 3: Sensoreinheit
- 4: Verarbeitungseinheit
- 5: Kommunikationseinheit
- 6: Modul-Steuereinrichtung
- 10: Reifen-Sensor-Modul
- 20: Auswerteeinheit
- 30: Fahrzeug-Steuereinrichtung
- 40: Messanordnung
- aR: radiale Beschleunigung
- A: Algorithmus
- Bk: k. Betriebsmodus
- B1: Park-Betriebsmodus
- B2: Fahrt-Betriebsmodus
- D: Abstand
- dt: Zeitintervall
- F: Korrekturfunktion
- i: Index
- k: Index
- K: Korrekturfaktor
- R: radiale Richtung
- S3: Sensor-Signal
- S4: Daten-Signal
- v1: Fahrzeug-Geschwindigkeit
- vR: Abrollgeschwindigkeit
- W: Fahrtstrecke
- Wi: i. Streckenintervall

## Patentansprüche

1. Verfahren zum Ermitteln einer Fahrtstrecke (W) eines Fahrzeugreifens (2), wobei der Fahrzeugreifen (2) ein Reifen-Sensor-Modul (10) mit einer Sensoreinheit (3) zur Messung einer radialen Beschleunigung (aR) aufweist, mit mindestens den folgenden Schritten:
- Erzeugen von die radiale Beschleunigung (aR) des Fahrzeugreifens (2) charakterisierenden Sensor-Signalen (S3) durch die Sensoreinheit (3) über mindestens ein Zeitintervall (dt);
- Ermitteln mindestens eines durch den Fahrzeugreifen (2) innerhalb des jeweiligen Zeitintervalls (dt) zurückgelegten Streckenintervalls (Wi) in Abhängigkeit der erzeugten Sensor-Signale (S3) durch einen Algorithmus (A); und
- Ermitteln der Fahrtstrecke (W) des Fahrzeugreifens (2) aus dem mindestens einen ermittelten Streckenintervall (Wi),
wobei bei der Ermittlung des mindestens einen Streckenintervalls (Wi) von dem Algorithmus (A) ein Korrekturfaktor (K) berücksichtigt wird zum Korrigieren des ermittelten Streckenintervalls (Wi),
**dadurch gekennzeichnet, dass**
der Korrekturfaktor (K) aus einer Korrekturfunktion (F) ermittelt wird, wobei die Korrekturfunktion (F) der von der Sensoreinheit (3) gemessenen radialen Beschleunigung (aR) oder einer davon abhängigen Größe einen Korrekturfaktor (K) zuordnet,
wobei die Korrekturfunktion (F) derartig festgelegt ist, dass das Streckenintervall (Wi) durch den jeweils zugeordneten Korrekturfaktor (K) bei einer geringen radialen Beschleunigung (aR) stärker korrigiert wird als bei einer hohen radialen Beschleunigung (aR).

2. Verfahren nach Anspruch 1,
**dadurch gekennzeichnet, dass**
in Abhängigkeit der ermittelten radialen Beschleunigung (aR) und einem Abstand (D) zwischen der Sensoreinheit (3) und einer Drehachse (2a) des jeweiligen Fahrzeugreifens (2) die Abrollgeschwindigkeit (vR) des jeweiligen Fahrzeugreifens (2) ermittelt wird, und nachfolgend aus der ermittelten Abrollgeschwindigkeit (vR) unter Berücksichtigung des Zeitintervalls (dt) das Streckenintervall (Wi) berechnet wird.

3. Verfahren nach Anspruch 2,
**dadurch gekennzeichnet, dass**
der der jeweiligen radialen Beschleunigung (aR) zugeordnete Korrekturfaktor (K) auf die ermittelte radiale Beschleunigung (aR) oder auf eine ermittelte Abrollgeschwindigkeit (vR) oder auf das berechnete Streckenintervall (Wi) angewandt wird, insbesondere damit multipliziert wird, zum Ermitteln des korrigierten Streckenintervalls (Wi).

4. Verfahren nach einem der vorhergehenden Ansprüche,
**dadurch gekennzeichnet, dass**
die Korrekturfunktion (F) eine stetige Funktion ist.

5. Verfahren nach einem der vorhergehenden Ansprüche,
**dadurch gekennzeichnet, dass**
die Korrekturfunktion (F) derartig festgelegt ist, dass einer geringen radialen Beschleunigung (aR) ein Korrekturfaktor (F) von größer als 1 zugeordnet wird und bei ansteigender radialer Beschleunigung (aR) ein asymptotisch gegen 1 zulaufender Korrekturfaktor (F) zugeordnet wird.

6. Verfahren nach einem der vorhergehenden Ansprüche,
**dadurch gekennzeichnet, dass**
die Korrekturfunktion (F) in Abhängigkeit eines Reifenradius des jeweiligen Fahrzeugreifens (2) und/oder eines Abstands (D) zwischen der Drehachse (2a) des jeweiligen Fahrzeugreifens (2) und der Sensoreinheit (3) des Reifen-Sensor-Moduls (10) und/oder in Abhängigkeit eines Einsatzbereiches des den Fahrzeugreifen (1) aufweisenden Fahrzeuges (1) und/oder in Abhängigkeit der verwendeten Sensoreinheit (3) festgelegt wird.

7. Verfahren nach einem der vorhergehenden Ansprüche,
**dadurch gekennzeichnet, dass**
der Algorithmus (A) auf einer Verarbeitungseinheit (4) am Reifen-Sensor-Modul (10) ausgeführt wird.

8. Verfahren nach einem der vorhergehenden Ansprüche,
**dadurch gekennzeichnet, dass**
das Reifen-Sensor-Modul (10) in unterschiedliche Betriebsmodi (Bk) geschaltet werden kann, wobei eine Ermittlung des Streckenintervalls (Wi) lediglich dann stattfindet, wenn als Betriebsmodus (Bk) kein Park-Betriebsmodus (B1) aktiviert ist.

9. Messanordnung (40) zum Ermitteln einer Fahrtstrecke (W) eines Fahrzeugreifens (2), mit einem eine Sensoreinheit (3) aufweisenden Reifen-Sensor-Modul (10) zur Anbringung an dem Fahrzeugreifen (2) sowie einem Algorithmus (A), wobei der Algorithmus (A) ausgebildet ist:
- ein durch den Fahrzeugreifen (2) innerhalb eines Zeitintervalls (dt) zurückgelegtes Streckenintervall (Wi) in Abhängigkeit eines von der Sensoreinheit (3) erzeugten Sensor-Signals (S3) sowie unter Berücksichtigung eines Korrekturfaktors (F) zu ermitteln, wobei das Sensor-Signal (S3) eine radiale Beschleunigung (aR) des Fahrzeugreifens (2) charakterisiert; und
- die Fahrtstrecke (W) des Fahrzeugreifens (2) aus dem ermittelten Streckenintervall (Wi) zu ermitteln,
**dadurch gekennzeichnet, dass**
der Algorithmus (A) ferner ausgebildet ist, den Korrekturfaktor (K) aus einer Korrekturfunktion (F) zu ermitteln, wobei die Korrekturfunktion (F) der von der Sensoreinheit (3) gemessenen radialen Beschleunigung (aR) oder einer davon abhängigen Größe einen Korrekturfaktor (K) zuordnet,
wobei die Korrekturfunktion (F) derartig festgelegt ist, dass das Streckenintervall (Wi) durch den jeweils zugeordneten Korrekturfaktor (K) bei einer geringen radialen Beschleunigung (aR) stärker korrigiert wird als bei einer hohen radialen Beschleunigung (aR).

10. Fahrzeug (1) mit einer Messanordnung (40) nach Anspruch 9, wobei der Algorithmus (A) am Fahrzeugreifen (2) auf einer Verarbeitungseinheit (4) des Reifen-Sensor-Moduls (10) oder im Fahrzeug (1) auf einer Auswerteeinheit (20) abseits des Fahrzeugreifens (2) vorgesehen ist.

## Claims

1. Method for determining a route (W) of a vehicle tyre (2), wherein the vehicle tyre (2) has a tyre sensor module (10) with a sensor unit (3) for measuring a radial acceleration (aR), having at least the following steps of:
- generating sensor signals (S3) characterizing the radial acceleration (aR) of the vehicle tyre (2) over at least one interval of time (dt) by means of the sensor unit (3);
- determining at least one route interval (Wi) covered by the vehicle tyre (2) within the respective interval of time (dt) on the basis of the generated sensor signals (S3) by means of an algorithm (A); and
- determining the route (W) of the vehicle tyre (2) from the at least one determined route interval (Wi),
wherein, when determining the at least one route interval (Wi), the algorithm (A) takes into account a correction factor (K) for correcting the determined route interval (Wi),
**characterized in that**
the correction factor (K) is determined from a correction function (F), wherein the correction function (F) assigns a correction factor (K) to the radial acceleration (aR) measured by the sensor unit (3) or to a variable dependent thereon,
wherein the correction function (F) is determined in such a manner that the route interval (Wi) is corrected to a greater degree by means of the respectively assigned correction factor (K) in the case of a low radial acceleration (aR) than in the case of a high radial acceleration (aR).

2. Method according to Claim 1,
**characterized in that**
on the basis of the determined radial acceleration (aR) and a distance (D) between the sensor unit (3) and an axis of rotation (2a) of the respective vehicle tyre (2), the rolling speed (vR) of the respective vehicle tyre (2) is determined, and the route interval (Wi) is then calculated from the determined rolling speed (vR), taking into account the interval of time (dt).

3. Method according to Claim 2,
**characterized in that**
the correction factor (K) assigned to the respective radial acceleration (aR) is applied to the determined radial acceleration (aR) or to a determined rolling speed (vR) or to the calculated route interval (Wi), in particular is multiplied thereby, in order to determine the corrected route interval (Wi).

4. Method according to any of the preceding claims,
**characterized in that**
the correction function (F) is a continuous function.

5. Method according to any of the preceding claims,
**characterized in that**
the correction function (F) is determined in such a manner that a correction factor (F) of greater than 1 is assigned to a low radial acceleration (aR) and a correction factor (F) running asymptotically towards 1 is assigned in the case of an increasing radial acceleration (aR).

6. Method according to any of the preceding claims,
**characterized in that**
the correction function (F) is determined on the basis of a tyre radius of the respective vehicle tyre (2) and/or a distance (D) between the axis of rotation (2a) of the respective vehicle tyre (2) and the sensor unit (3) of the tyre sensor module (10) and/or on the basis of a field of application of the vehicle (1) having the vehicle tyre (1) and/or on the basis of the sensor unit (3) used.

7. Method according to any of the preceding claims,
**characterized in that**
the algorithm (A) is executed on a processing unit (4) on the tyre sensor module (10).

8. Method according to any of the preceding claims,
**characterized in that**
the tyre sensor module (10) can be switched to different operating modes (Bk), wherein the route interval (Wi) is determined only when a parking operating mode (B1) is not activated as the operating mode (Bk).

9. Measuring arrangement (40) for determining a route (W) of a vehicle tyre (2), having a tyre sensor module (10), which has a sensor unit (3) and is intended to be fitted to the vehicle tyre (2), and an algorithm (A), wherein the algorithm (A) is designed:
- to determine a route interval (Wi) covered by the vehicle tyre (2) within an interval of time (dt) on the basis of a sensor signal (S3) generated by the sensor unit (3) and taking into account a correction factor (F), wherein the sensor signal (S3) characterizes a radial acceleration (aR) of the vehicle tyre (2); and
- to determine the route (W) of the vehicle tyre (2) from the determined route interval (Wi),
**characterized in that**
the algorithm (A) is also designed to determine the correction factor (K) from a correction function (F), wherein the correction function (F) assigns a correction factor (K) to the radial acceleration (aR) measured by the sensor unit (3) or to a variable dependent thereon,
wherein the correction function (F) is determined in such a manner that the route interval (Wi) is corrected to a greater degree by means of the respectively assigned correction factor (K) in the case of a low radial acceleration (aR) than in the case of a high radial acceleration (aR).

10. Vehicle (1) having a measuring arrangement (40) according to Claim 9, wherein the algorithm (A) is provided on the vehicle tyre (2) on a processing unit (4) of the tyre sensor module (10) or in the vehicle (1) on an evaluation unit (20) remote from the vehicle tyre (2).

## Revendications

1. Procédé de détermination d'une trajectoire (W) d'un pneu de véhicule (2), le pneu de véhicule (2) comportant un module capteur de pneu (10) doté d'une unité de capteur (3) pour mesurer une accélération radiale (aR), comprenant au moins les étapes suivantes :
- génération de signaux de capteur (S3) caractérisant l'accélération radiale (aR) du pneu de véhicule (2) au moyen de l'unité de capteur (3) pendant au moins un intervalle de temps (dt) ;
- détermination, au moyen d'un algorithme (A), d'au moins un intervalle de trajectoire (Wi) parcouru par le pneu de véhicule (2) au cours de l'intervalle de temps (dt) respectif en fonction des signaux de capteur (S3) générés ; et
- détermination de la trajectoire (W) du pneu de véhicule (2) à partir dudit au moins un intervalle de trajectoire (Wi) déterminé,
l'algorithme (A) tenant compte, lors de la détermination dudit au moins un intervalle de trajectoire (Wi), d'un facteur de correction (K) pour corriger l'intervalle de trajectoire (Wi) déterminé,
**caractérisé en ce que**
le facteur de correction (K) est déterminé à partir d'une fonction de correction (F), la fonction de correction (F) associant un facteur de correction (K) à l'accélération radiale (aR) mesurée par l'unité de capteur (3) ou à une grandeur qui en dépend, la fonction de correction (F) étant définie de telle sorte que l'intervalle de distance (Wi) soit plus fortement corrigé par le facteur de correction (K) respectif associé dans le cas où l'accélération radiale (aR) est faible que dans le cas où l'accélération radiale (aR) est élevée.

2. Procédé selon la revendication 1,
**caractérisé en ce que**,
la vitesse de roulement (vR) du pneu de véhicule (2) respectif est déterminée en fonction de l'accélération radiale (aR) déterminée et d'une distance (D) entre l'unité de capteur (3) et un axe de rotation (2a) du pneu de véhicule (2) respectif, et l'intervalle de trajectoire (Wi) est ensuite calculé à partir de la vitesse de roulement (vR) déterminée en tenant compte de l'intervalle de temps (dt).

3. Procédé selon la revendication 2,
**caractérisé en ce que**
le facteur de correction (K) associé à l'accélération radiale (aR) respective est appliqué à l'accélération radiale (aR) déterminée ou à une vitesse de roulement (vR) déterminée ou à l'intervalle de distance (Wi) calculé, notamment multiplié par celui-ci, pour déterminer l'intervalle de distance (Wi) corrigé.

4. Procédé selon l'une des revendications précédentes,
**caractérisé en ce que**
la fonction de correction (F) est une fonction continue.

5. Procédé selon l'une des revendications précédentes,
**caractérisé en ce que**
la fonction de correction (F) est définie de telle sorte qu'un facteur de correction (F) supérieur à 1 soit associé à une faible accélération radiale (aR) et qu'un facteur de correction (F) asymptotiquement croissant vers 1 soit associé lorsque l'accélération radiale (aR) augmente.

6. Procédé selon l'une des revendications précédentes,
**caractérisé en ce que**
la fonction de correction (F) est déterminée en fonction d'un rayon de pneu du pneu de véhicule (2) respectif et/ou d'une distance (D) entre l'axe de rotation (2a) du pneu de véhicule (2) respectif et l'unité de capteur (3) du module capteur de pneu (10) et/ou en fonction d'une plage d'utilisation du véhicule (1) comportant le pneu de véhicule (1) et/ou en fonction de l'unité de capteur (3) utilisée.

7. Procédé selon l'une des revendications précédentes,
**caractérisé en ce que**
l'algorithme (A) est exécuté sur une unité de traitement (4) au niveau du module capteur de pneu (10).

8. Procédé selon l'une des revendications précédentes,
**caractérisé en ce que**
le module capteur de pneu (10) peut être amené à basculer dans différents modes de fonctionnement (Bk), une détermination de l'intervalle de trajectoire (Wi) n'ayant lieu que si aucun mode de fonctionnement de stationnement (B1) n'est activé en tant que mode de fonctionnement (Bk).

9. Dispositif de mesure (40) destiné à déterminer une trajectoire (W) d'un pneu de véhicule (2), comprenant un module capteur de pneu (10) comportant une unité de capteur (3) et destiné à être monté sur le pneu de véhicule (2) ainsi qu'un algorithme (A), l'algorithme (A) étant conçu :
- pour déterminer un intervalle de trajectoire (Wi) parcouru par le pneu de véhicule (2) au cours d'un intervalle de temps (dt) en fonction d'un signal de capteur (S3) généré par l'unité de capteur (3) et en tenant compte d'un facteur de correction (F), le signal de capteur (S3) caractérisant une accélération radiale (aR) du pneu de véhicule (2) ; et
- pour déterminer la trajectoire (W) du pneu de véhicule (2) à partir de l'intervalle de trajectoire (Wi) déterminé,
**caractérisé en ce que**
l'algorithme (A) est en outre conçu pour déterminer le facteur de correction (K) à partir d'une fonction de correction (F), la fonction de correction (F) associant un facteur de correction (K) à l'accélération radiale (aR) mesurée par l'unité de capteur (3) ou à une grandeur qui en dépend,
la fonction de correction (F) étant définie de telle sorte que l'intervalle de distance (Wi) soit plus fortement corrigé par le facteur de correction (K) respectif associé dans le cas où l'accélération radiale (aR) est faible que dans le cas où l'accélération radiale (aR) est élevée.

10. Véhicule (1) doté d'un dispositif de mesure (40) selon la revendication 9, l'algorithme (A) étant prévu au niveau du pneu de véhicule (2) sur une unité de traitement (4) du module capteur de pneu (10) ou dans le véhicule (1) sur une unité d'évaluation (20) distante du pneu de véhicule (2).
